Europäisches Patentamt

European Patent Office

Office européen des brevets

(11) Veröffentlichungsnummer: **0 451 731 A2**

# (12) EUROPÄISCHE PATENTANMELDUNG

(21) Anmeldenummer: 91105447.6

(22) Anmeldetag: 05.04.91

(51) Int. Cl.⁵: **B60R 21/26**

(30) Priorität: 09.04.90 DE 4011493
10.09.90 DE 4028715

(43) Veröffentlichungstag der Anmeldung:
16.10.91 Patentblatt 91/42

(84) Benannte Vertragsstaaten:
AT CH DE ES FR GB IT LI SE

(71) Anmelder: **Kroiss, Alfred**
**Eichenstrasse 15a**
**W-8059 Wartenberg(DE)**

Anmelder: **Methfessel, Heinz**
**Eichenstrasse 31**

**W-8059 Wartenberg(DE)**

(72) Erfinder: **Kroiss, Alfred**
**Eichenstrasse 15a**
**W-8059 Wartenberg(DE)**
Erfinder: **Methfessel, Heinz**
**Eichenstrasse 31**
**W-8059 Wartenberg(DE)**

(74) Vertreter: **Zinnecker, Armin, Dipl.-Ing.**
**Lorenz-Seidler-Gossel et al**
**Widenmayerstrasse 23**
**W-8000 München 22(DE)**

(54) Gaskissen-Aufprallschutzvorrichtung.

(57) Eine Gaskissen-Aufprallschutzvorrichtung (Airbag) für die Insassen eines Kraftfahrzeugs besitzt ein durch eine Druckgasquelle (1, 2) aufblasbares Gaskissen (3). Um ein weiches Eintauchen des Körpers in das Gaskissen (3) zu ermöglichen, ist zwischen dem Gaskissen-Innenraum (51) und der Umgebung (52) ein Ablaßventil (53) angeordnet, das bei Überschreitung einer vorgegebenen Druckdifferenz zwischen Gaskissen-Innenraum (51) und Umgebung (52) öffnet.

Fig. 1

EP 0 451 731 A2

Die Erfindung betrifft eine Gaskissen-Aufprallschutzvorrichtung (Airbag) für die Insassen eines Kraftfahrzeugs mit einem durch eine Druckgasquelle aufblasbaren Gaskissen. Bei der Druckgasquelle kann es sich um eine Gasdruckpatrone, eine Gasgeneratorpatrone oder ähnliches handeln.

Ein Airbag dieser Art ist bereits bekannt, beispielsweise aus den deutschen Patentschriften 36 44 554, 32 35 176 oder 21 52 902.

Bei den vorbekannten Lösungen wird das Gaskissen im Fall eines Aufpralls aufgeblasen. Es verbleibt dann in diesem aufgeblasenen Zustand. Wenn das im Gaskissen enthaltene Gas nicht ausströmen kann, ist das unfallbedingte Eintauchen des Körpers in das Gaskissen relativ hart.

Ein weiteres Problem besteht darin, den Airbag einerseits schnell genug aufzublasen, andererseits aber durch das schnelle Aufblasen nicht zu überdehnen und damit zu zerstören. Zu diesem Zweck ist es bereits bekannt, zwei Treibladungen zeitlich verzögert zu zünden, den Airbag also in einen zeitlichen Abstand von beispielsweise 15 ms zunächst teilweise und dann vollständig aufzublasen. Die Verwendung von zwei Druckgasquellen, die in einem wohldefinierten zeitlichen Abstand geöffnet werden müssen, bringt einen erheblichen Aufwand mit sich.

Aufgabe der Erfindung ist es, ein weiches Eintauchen des Körpers in das Gaskissen zu ermöglichen.

Eine weitere Aufgabe der Erfindung besteht darin, ein Airbag bei nach wie vor schnellem und sicherem Aufblasen zu vereinfachen.

Erfindungsgemäß wird diese Aufgabe gelöst durch ein zwischen dem Gaskissen-Innenraum und der Umgebung angeordnetes Ablaßventil, das bei Überschreitung einer vorgegebenen Druckdifferenz zwischen Gaskissen-Innenraum und Umgebung öffnet. Die zum Öffnen des Ablaßventils erforderliche Druckdifferenz wird so vorgegeben, daß sie überschritten wird, wenn der Körper in das Gaskissen eintaucht. Durch das Ablaßventil kann dann eine vorgebbare Gasmenge aus dem Gaskissen abströmen, wodurch ein weiches Eintauchen des Körpers in das Gaskissen ermöglicht wird.

Ein weiterer mit der Erfindung erreichbarer Vorteil besteht darin, daß der Airbag auch bei mehreren aufeinanderfolgenden Aufprallvorgängen zuverlässig wirkt. Es ist bereits bekannt gewesen, einen Gasdurchlauf im Gaskissen anzubringen, der zwar zuläßt, daß das Gaskissen einmal voll aufgeblasen wird, der aber dann das Gas sofort aus dem Kissen entläßt, so daß das Luftkissen in sich zusammenfällt und für einen weiteren Aufprall nicht mehr zur Verfügung steht. Nach der erfindungsgemäßen Lösung wird während des ersten Eintauchens des Körpers in das Gaskissen das Ablaßventil geöffnet. Sobald der erste Eintauchvorgang beendet ist, schließt das Ablaßventil, und das zu diesem Zeitpunkt im Gaskissen vorhandene Gas verbleibt im Gaskissen, wo es für einen eventuell nachfolgenden Aufprall wieder zum Schutz des Körpers zur Verfügung steht. Auch bei diesem nachfolgenden Aufprallvorgang öffnet das Ablaßventil während des Eintauchens des Körpers, so daß also auch beim zweiten und eventuell noch weiteren folgenden Aufprallvorgängen ein weiches Eintauchen des Körpers in das Gaskissen ermöglicht wird. Demgegenüber befand sich bei dem vorbekannten Gasdurchlauf das Gas nur für etwa 40 bis 50 Millisekunden im Gaskissen. Nach Ablauf dieses Zeitraums war das Gaskissen dann wirkungslos. Die Zeitspanne von 40 bis 50 ms reicht jedoch nicht aus, um mehrere aufeinanderfolgende Aufprallvorgänge abzudecken. Nach der erfindungsgemäßen Lösung entweicht nur diejenige Gasmenge aus dem Gaskissen, die durch das jeweilige Eintauchen in den Airbag verdrängt wird, um ein weiches Eintauchen zu ermöglichen.

Ein weiterer mit der Erfindung erreichbarer Vorteil besteht darin, daß auch bei hohen Außentemperaturen eine Zerstörung des Airbag vermieden wird. Bei relativ hohen Außentemperaturen strömt mehr Gas in den Airbag ein. Hierdurch besteht die Gefahr, daß der Airbag zerstört wird bzw. zerreißt. Durch das erfindungsgemäß vorgesehene Ablaßventil wird die Zerstörung des Airbag vermieden. Das durch die erhöhte Außentemperatur in den Airbag zusätzlich einströmende Gas kann durch das Ablaßventil ausströmen.

Die erfindungsgemäße Lösung macht es möglich, daß nicht mehr zwei Druckgasquellen im definierten zeitlichen Abstand voneinander gezündet werden müssen, sondern daß das Airbag auch schnell und zuverlässig durch eine einzige Druckgasquelle aufgeblasen werden kann; es ist allerdings nicht ausgeschlossen, nach wie vor zwei Druckgasquellen zu verwenden und im zeitlichen Abstand zu zünden. Das Ablaßventil bewirkt, daß nach einer bestimmten Zeitspanne ein Druckabbau im Airbag erfolgen kann. Diese Zeitspanne kann fest vorgegeben werden. Es ist beispielsweise möglich, nach 10 bis 15 ms das Ablaßventil zu öffnen (je kleiner das Airbag-Volumen ist, desto kürzer sollte die genannte Zeitspanne gewählt werden). Durch die Entlastung, die durch das Ablaßventil bewirkt wird, wird eine Zerstörung des Airbag verhindert. Gleichwohl wird der Airbag schnell genug und auch vollständig aufgeblasen.

Vorteilhafte Weiterbildungen der Erfindung sind in den Unteransprüchen beschrieben.

Vorzugsweise beträgt die vorgegebene Druckdifferenz 1 bar. Bei einem Umgebungsdruck von etwa 1 bar entspricht dies also einem Druck von 2 bar im Gaskissen. Wenn der vorgegebene Differenzdruck zu gering ist, besteht die Gefahr, daß während des Eintauchens zu viel Gas verloren wird, so daß bei nachfolgenden Aufprallvorgängen nicht mehr genügend Gas zur Verfügung steht. Wenn der vorgegebene Differenzdruck zu groß gewählt wird, kann die Dämpfungswirkung beim Eintauchen des Körpers in das Gaskissen zu gering sein. Es ist also bei der Vorgabe des Differenzdrucks für das Ablaßventil ein Kompromiß zwischen Druckverlust bzw. Gasverlust einerseits und Dämpfungswirkung beim Eintauchen andererseits zu finden.

Vorteilhaft ist es, wenn das Ablaßventil zunächst vollständig geschlossen ist und erst nach der Betätigung der Druckgasquelle aktiviert wird, vorzugsweise nach einer vorgegebenen Zeitspanne nach der Betätigung der Druckgasquelle. Wenn das Ablaßventil zunächst vollständig geschlossen ist, kann nach der Betätigung der Druckgasquelle zunächst das Gaskissen ungestört vollständig aufgeblasen werden. Während dieser Zeit ist das Ablaßventil noch nicht aktiviert, es wirkt also wie eine geschlossene Wand. Im Ergebnis bedeutet dies, daß der vorgegebene Differenzdruck unendlich groß ist. Es kann allerdings auch genügen, wenn der vorgegebene Differenzdruck sehr groß ist.

Erst nach der Betätigung der Druckgasquelle wird das Ablaßventil aktiviert. Ab der Aktivierung kann es dann als Ablaßventil mit vorgegebener Druckdifferenz wirken. Vorzugsweise erfolgt diese Aktivierung nach einer vorgegebenen Zeitspanne nach der Betätigung der Druckgasquelle. Diese Zeitspanne wird so gewählt, daß einerseits genügend Zeit vorhanden ist, um das Gaskissen ungestört vollständig aufzublasen und daß andererseits das Ablaßventil möglichst frühzeitig aktiviert wird, um möglichst bald ein weiches Eintauchen des Körpers ermöglichen zu können.

Vorzugsweise wird das Ablaßventil 30 ms nach der Betätigung der Druckgasquelle aktiviert. Im allgemeinen genügen 30 ms, um das Gaskissen vollständig aufzublasen.

Nach einer weiteren vorteilhaften Weiterbildung wird das Ablaßventil 10 bis 15 ms nach der Betätigung der Druckgasquelle aktiviert. Nach dieser Zeitspanne hat diese das Airbag noch nicht vollständig aufgeblasen. Wenn nur eine einzige Druckgasquelle verwendet wird, und wenn das Airbag durch diese schnell genug gefüllt werden soll, baut sich innerhalb sehr kurzer Zeit ein sehr hoher Druck im Airbag auf, der zu einer Überdehnung und zu einer Zerstörung des Airbag- Materials führen kann. Wenn jedoch nach 10 bis 15 ms das Ablaßventil geöffnet wird, findet eine Druckentlastung statt, die eine Zerstörung des Airbag verhindert, gleichwohl aber ermöglicht, daß das Airbag auch bei nur einer Druckgasquelle noch schnell genug und vollständig ohne Zerstörung aufgeblasen wird.

Nach einer vorteilhaften Weiterbildung sind zwei Druckgasquellen vorhanden, wobei die zweite Druckgasquelle eine vorgegebene Zeitspanne von vorzugsweise 15 ms nach der ersten Druckgasquelle betätigt wird. Durch die zeitlich verzögerte Betätigung zweier Druckgasquellen wird ohne Gefährdung des Gaskissens bzw. des Gaskissen-Materials ein besonders schnelles und zuverlässiges Aufblasen des Gaskissens ermöglicht, wie beispielsweise in der DE-OS 31 50 297 beschrieben; der Aufwand bei der Realisierung ist allerdings größer.

Das Ablaßventil kann über einen pyrotechnischen Auslösemechanismus aktiviert werden.

Vorzugsweise besitzt das Ablaßventil ein Gehäuse, in dem ein eine Ventilplatte tragender Ventilstößel längsverschieblich geführt ist.

Vorteilhaft ist es, wenn das Ablaßventil an seiner dem Gaskissen-Innenraum zugewandten Seite eine Abschlußplatte besitzt, die vorzugsweise durch einen Stift entfernbar und/ oder zerstörbar ist, wobei der Stift vorzugsweise durch eine Treibladung antreibbar ist. Zunächst wirkt ausschließlich die Abschlußplatte, die eine vollständige Abdichtung des Ablaßventils gegenüber dem Gaskissen-Innenraum bewirkt. Nach der Betätigung der Druckgasquelle wird die Abschlußplatte entfernt oder zerstört, so daß ab diesem Zeitpunkt das Ablaßventil aktiviert ist. Der die Abschlußplatte entfernende oder zerstörende Stift kann durch eine elektrisch betätigbare Treibladung antreibbar sein. Vorzugsweise wird die Druckgasquelle durch ein Gehäuse mit einem Ringraum gebildet. Der Ringraum ist vorzugsweise beidseitig ringförmig verschweißt. Mit dem Gehäuse kann ein zentraler Einsatz verschweißt sein. Vorteilhaft ist es, wenn mit dem Einsatz eine Abschlußplatte (Berstscheibe) verbunden, vorzugsweise verschweißt, ist.

Das Gehäuse kann scheibenförmig sein. Wenn der vorzugsweise elliptische oder ellipsenähnliche Querschnitt des Ringraums in radialer Richtung kleiner ist als in axialer Richtung, wird im Falle eines Versagens des scheibenförmigen Gehäuses der Fahrzeuginsasse geschützt. Das scheibenförmige Gehäuse wird dann nämlich in radialer Richtung zerstört, so daß wegfliegende Bruchstücke den in axialer Richtung vor dem Gehäuse sitzenden Fahrzeuginsassen nicht gefährden können.

Ein Ausführungsbeispiel der Erfindung wird nachstehend anhand der beigefügten Zeichnung im einzelnen erläutert. In der Zeichnung zeigt

Fig. 1    einen Schnitt durch ein Lenkrad mit Airbag,

Fig. 2    den in Fig. 1 dargestellten Gasverteiler in einer vergrößerten Ansicht,

Fig. 3    einen Schnitt längs der Linie III-III in Fig. 2,

Fig. 4    einen Schnitt längs der Linie IV-IV in Fig. 2,

Fig. 5 das in Fig. 1 dargestellte Ablaßventil in einer vergrößerten Ansicht,

Fig. 6 einen Schnitt durch die Lochplatte des Ablaßventils der Fig. 5 und

Fig. 7 einen Schnitt durch ein scheibenförmiges, eine ringraumförmige Druckgasquelle aufnehmendes Gehäuse.

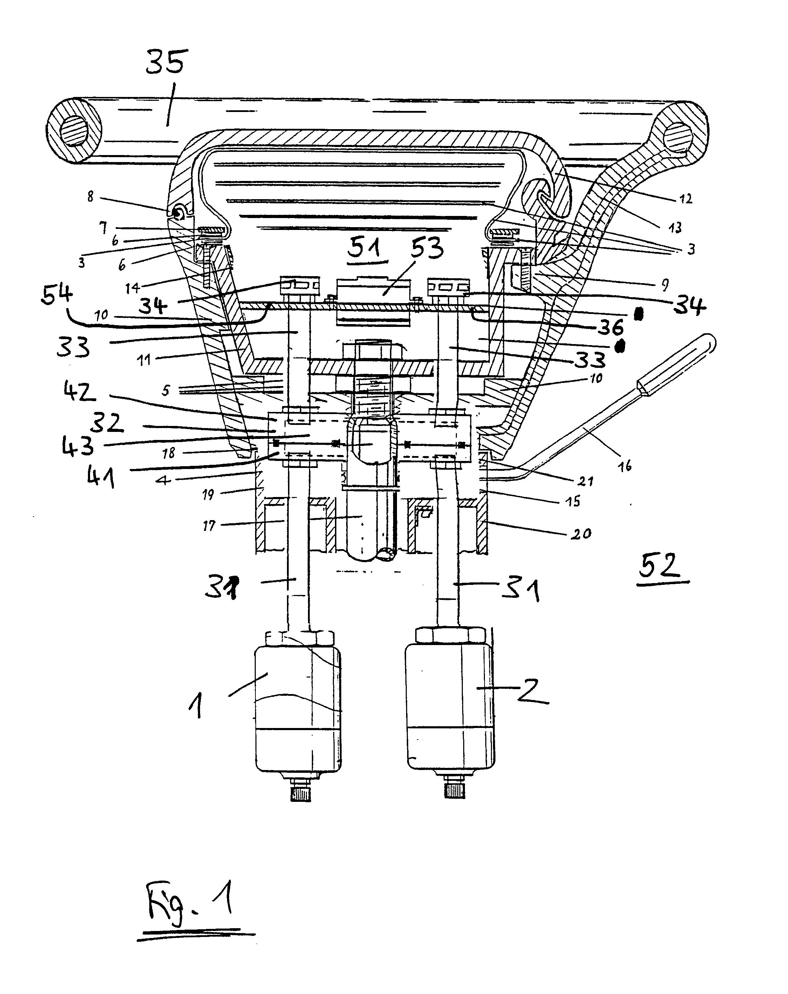

Der in Fig. 1 gezeigte Kraftfahrzeug-Airbag besitzt Gasdruckzylinder 1, 2, die über Leitungen 31 mit dem Gasverteiler 32 verbunden sind. Vom anderen Ende des Gasverteilers 32 führen Leitungen 33 zu den Verteilerdüsen 34. Im Lenkrad 35 befindet sich das gefaltete Gaskissen 3 unterhalb des Aufrißpolsters 12. Bei einem Beifahrer-Airbag ist das Gaskissen hinter einem Aufrißpolster in der Armaturenverkleidung in Höhe des sonst üblichen Handschuhfaches untergebracht. Zusätzliche seitliche Airbags können in den Türen vorgesehen sein.

Wenn bei einem Unfall, beispielsweise durch Deformierung der Karosserie des Fahrzeugs, Gefahr für die Fahrzeuginsassen angezeigt wird, werden die Druckgasquellen 1, 2 mit einer Zeitverzögerung von 15 ms hintereinander gezündet. Von den Druckgasquellen 1, 2 gelangt dann Druckgas über die Leitungen 31 und den Gasverteiler 32 sowie die Druckleitungen 33 und die Düsen 34 in das Gaskissen 3, das dadurch aufgeblasen wird.

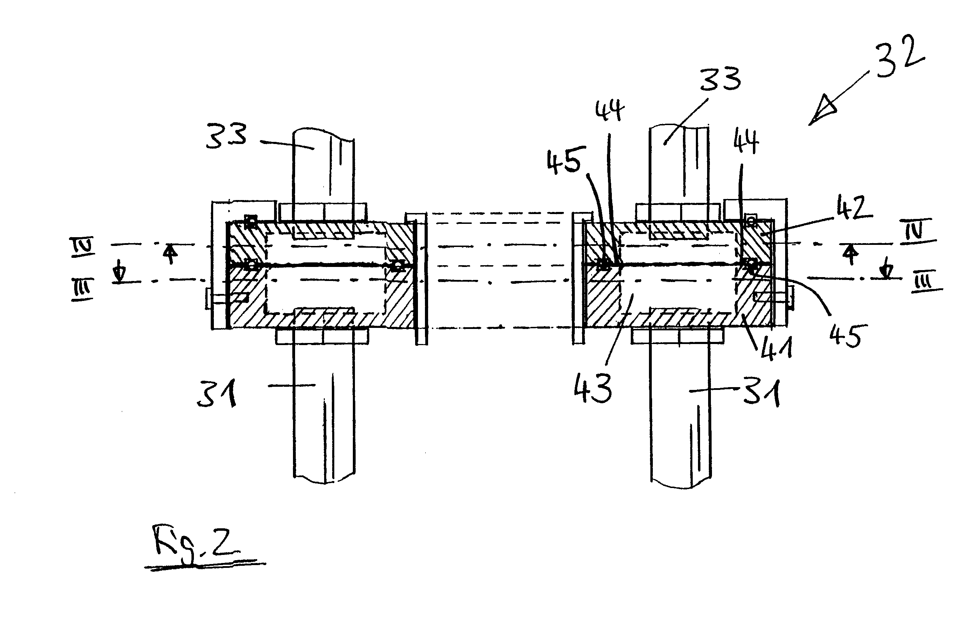

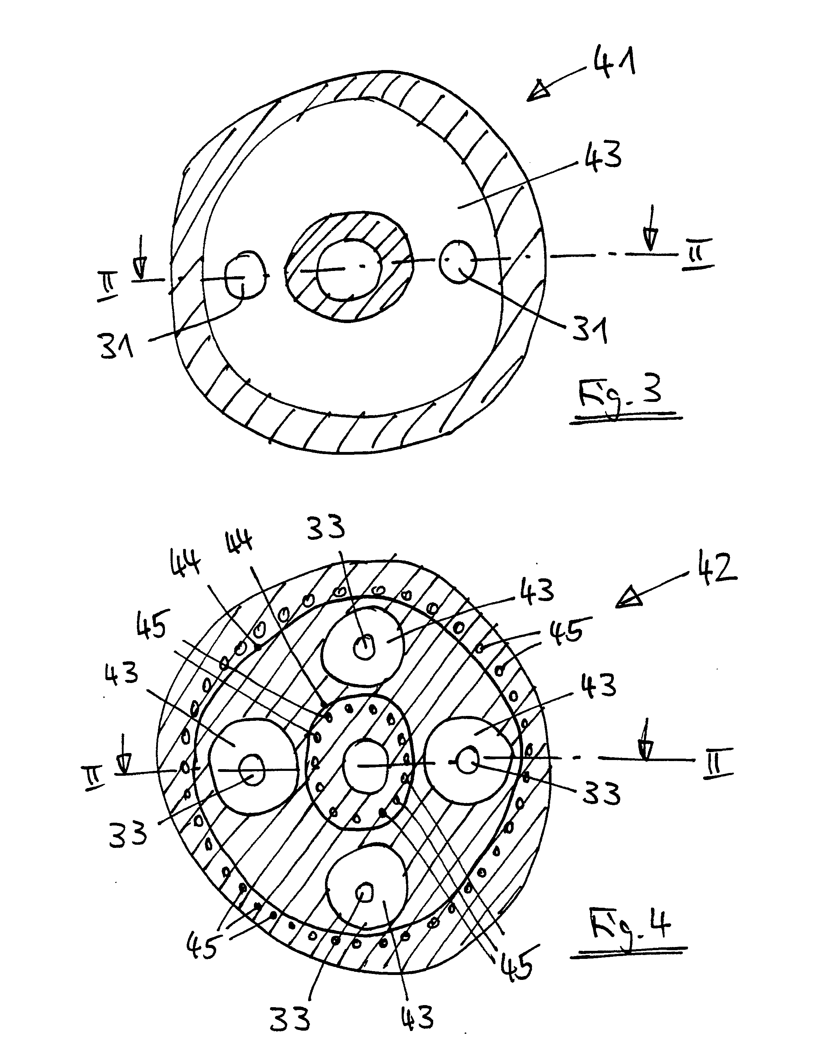

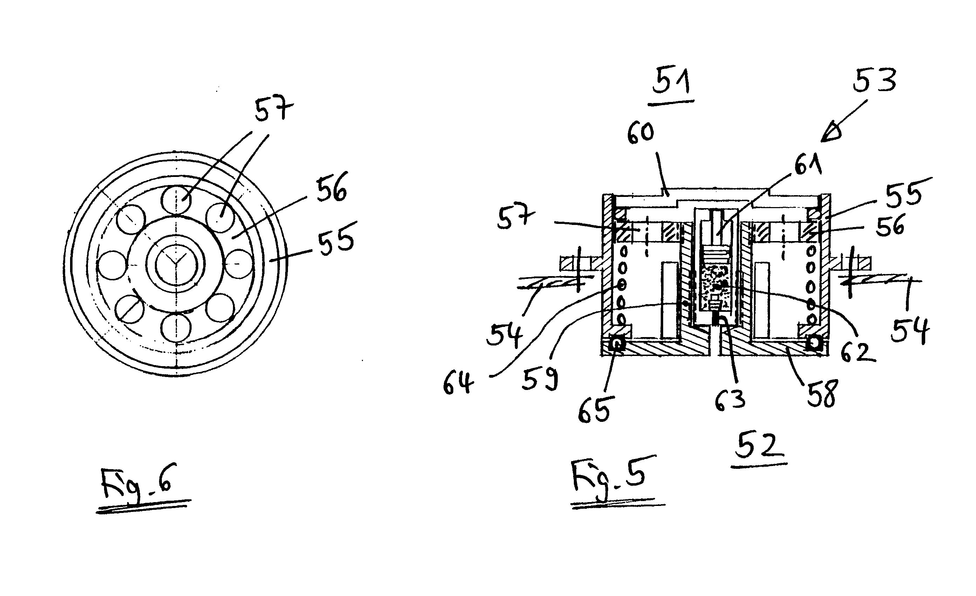

Die Fig. 2 zeigt den Gasverteiler 32 in einer vergrößerten Darstellung. Der Gasverteiler 32 besteht aus einer ersten, fahrzeugfesten Verteilerscheibe 41 und einer zweiten, lenkradfesten Verteilerscheibe 42, die zwischen sich einen Verteilerinnenraum 43 begrenzen. Es sind zwei Gasleitungen 31 und vier Gasleitungen 33 vorgesehen, wie aus den Fig. 3 und 4 ersichtlich. Die Druckgasquellen 1, 2 sind außerhalb des Lenkrades 35 fahrzeugfest angeordnet. Die erste Verteilerscheibe 41 ist mit der Lenkradverkleidung verbunden. Der Gasverteiler 32 umschließt die Lenksäule 17 ringförmig. Die Teil-Druckleitungen 31 von den Druckgasquellen 1, 2 zur ersten Verteilerscheibe 41 verlaufen teilweise in der Lenkradverkleidung 19. Der untere, zur ersten Verteilerscheibe 41 gehörende Verteilerinnenraum 43 ist kreisringförmig (vgl. Fig. 3), der obere, zur zweiten Verteilerscheibe 42 gehörende Verteilerinnenraum 43 besteht aus vier kreisförmigen Teilräumen (vgl. Fig. 4), die zu jeweils einer Druckleitung 33 führen. Der Verteilerinnenraum 43 ist durch Dichtungen 44 abgedichtet. Die Lagerungen zur Ermöglichung der Relativdrehung zwischen der ersten Verteilerscheibe 41 und der zweiten Verteilerscheibe 42 sind mit 45 bezeichnet.

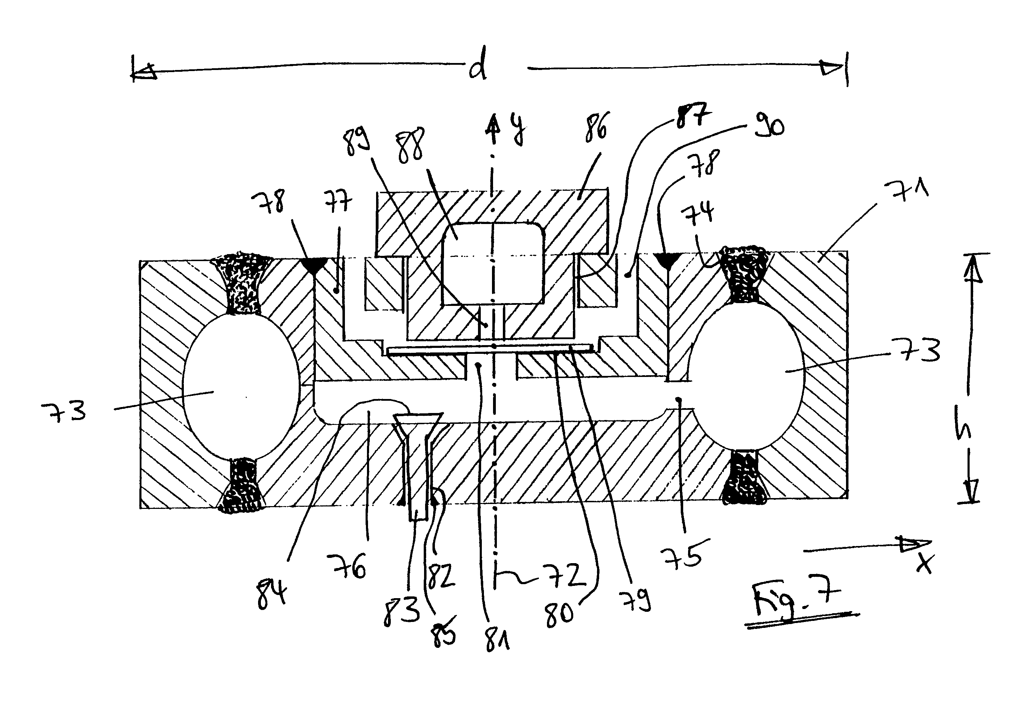

Zwischen dem Gaskissen-Innenraum 51 und der Umgebung 52 ist ein Ablaßventil 53 angeordnet, das in Fig. 5 vergrößert dargestellt ist. Das Ablaßventil 53 ist mit einer Platte 54 fest und dicht verbunden. Die Platte 54 ist lenkradfest angeordnet.

Wie in Fig. 5 gezeigt, besitzt das Ablaßventil 53 ein im wesentlichen zylinderförmigs Gehäuse 55, in dem eine Platte 56 mit Löchern 57 längsverschieblich und federbelastet 64 gelagert ist. Die Löcher 57 sind in der Lochplatte 56 längs eines Kreisbogens angeordnet (vgl. Fig. 6). Im Gehäuse 55 ist ein eine Ventilplatte 58 tragender Ventilstößel 59 längsverschieblich geführt. Das Ablaßventil 53 besitzt an seiner dem Gaskissen-Innenraum 51 zugewandten Seite eine Abschlußplatte 60, die mit dem Gehäuse 55 fest und abdichtend verbunden ist. Zunächst dichtet also die Abschlußplatte 60 den Gaskissen- Innenraum 51 vollständig ab; das Ablaßventil 53 ist noch nicht aktiviert und kann noch nicht wirken.

30 ms nach dem Zünden der ersten Druckgasquelle 1 und damit 15 ms nach dem Zünden der zweiten Druckgasquelle 2 wird die Abschlußplatte 60 zerstört. Dies geschieht durch den Stift 61, der durch die Treibladung 62 nach oben herausgeschossen wird, so daß er die Abschlußplatte 60 durchschlägt und zerstört. Damit ist das Ablaßventil 53 aktiviert. Die Treibladung 62 kann über Leitungen 63 elektrisch gezündet werden.

Nach der Entfernung der Abschlußplatte 60 und damit Aktivierung des Ablaßventils 53 wirkt der im Gaskissen-Innenraum 51 herrschende Druck über die Löcher 57 auf die Oberseite der Ventilplatte 58. Auf der Unterseite der Ventilplatte 58 wirkt der Druck der Umgebung 52. Der zum Öffnen des Ablaßventils 53 erforderliche Differenzdruck wird durch die Stärke der Feder 64 vorgegeben. Diese Feder 64 stützt sich unten an einem Absatz des Gehäuses 55 und oben an der Lochplatte 56 ab. Die Lochplatte 56 ist mit dem Ventilstößel 59 fest verbunden. An der oberen äußeren Ringfläche der Ventilplatte 58 befindet sich der Dichtungsring 65, der die Ventilplatte 58 gegenüber dem Gehäuse 55 abdichtet. Wenn der Differenzdruck groß genug ist, wird die Feder 64 zusammengedrückt, so daß die Ventilplatte 58 vom Gehäuse 55 abhebt. Dann kann Gas vom Gaskissen- Innenraum 51 durch die Löcher 57 zwischen Gehäuse und Ventilplatte 58 abströmen. Durch das Gas-Ablaßventil 53 wird eine Gasverdrängung im Airbag ermöglicht, wenn eine Person auf das Gaskissen geschleudert wird. Durch Abströmen des Gases durch die Verdrängung über das Körpergewicht kann das Airbagmaterial entspannt werden und ein relativ weiches Eintauchen in das Gaskissen ermöglicht werden. Das Gas-Ablaßventil wird vorzugsweise computergesteuert über eine pyrotechnische Zündanlage betätigt. Es ist beim Einschuß des Gases in den Airbag geschlossen und wird erst nach Ablauf von 28 bis 30 ms geöffnet, um beim Eintauchen des Körpers in das Luftkissen das Material zu entspannen. Ein mehrfaches umfallbedingtes Eintauchen des Körpers in die Luftkissen wird gefahrlos ermöglicht; die Stützkräfte werden reduziert.

Die Fig. 7 zeigt einen Querschnitt durch ein scheibenförmiges Gehäuse 71, das um die Achse 72 im wesentlichen rotationssymmetrisch ist. In dem scheibenförmigen Gehäuse befindet sich ein Ringraum 73, der die Form eines Torus besitzt. Die im Querschnitt kegelförmigen, in der Draufsicht kreisförmigen Öffnungen 74 werden vollständig verschweißt und anschließend an den Oberflächen des Gehäuses verschliffen. Vor der Verschweißung kann der torusförmige Ringraum 73 durch die Öffnungen 74 hindurch gefertigt werden. Danach werden diese Öffnungen 74 vollständig verschweißt und damit abgedichtet. Eine Radialbohrung 75 führt zum Innenraum 76, in dem sich ebenfalls Druckgas befindet. In dem Gehäuse 71 befindet sich ein zentraler Einsatz 77, der mit dem Gehäuse 71 durch eine in der Draufsicht ringförmige Schweißnaht 78 verschweißt ist. In einem zentralen Absatz des Einsatzes 77 befindet sich eine Abschlußplatte 79, die mit der Bodenfläche des Absatzes in dem Einsatz 77 verschweißt 80 ist.

Aus dieser Beschreibung folgt, daß der die Druckgasquelle bildende Innenraum, bestehend aus Ringraum 73 und Innenraum 76 vollständig durch Verschweißungen abgedichtet ist. Gesonderte Dichtungen sind daher nicht erforderlich. Der das Druckgas einschließende Raum wird von zwei Teilen gebildet, nämlich von dem Gehäuse 71 und dem Einsatz 77. Das Gehäuse 71 und der Einsatz 77 sind miteinander verschweißt (Schweißnaht 78). Auch die Öffnungen sind verschweißt: Die Öffnungen 74 des Gehäuses 71 sind verschweißt, und auch die Abschlußplatte 79, die die Öffnung 81 des Einsatzes 77 abdeckt, ist mit diesem Einsatz 77 verschweißt (Bezugszeichen 80). Gesonderte Dichtungen sind nicht erforderlich.

Das Gehäuse 71 ist scheibenförmig ausgestaltet. Seine Höhe h ist wesentlich geringer als sein Durchmesser d. Der Querschnitt des Ringraums 73 ist im wesentlichen elliptisch. Die Ausdehnung des Ringraum-Querschnitts ist in radialer Richtung x kleiner als in axialer Richtung y. Wenn der Druck in dem Ringraum 73 zu groß werden sollte, wird das Gehäuse 71 demnach in radialer Richtung x versagen und nicht in axialer Richtung y. Da der Fahrzeuginsasse sich in axialer Richtung des Gehäuses 71 befindet, kann er von Bruchstücken, die in radialer Richtung wegfliegen, nicht getroffen werden.

Im Boden des Gehäuses 71 kann eine Bohrung 82 vorgesehen sein, die sich zum Innenraum 76 hin kegelförmig erweitert. In diese Bohrung 82 kann ein in gleicher Weise geformter Verriegelungsstift 83 eingesetzt werden. Beim Befüllen des Druckgasraumes 73, 76 wird der Stift 83 im wesentlichen in der in der Fig. 7 gezeichneten Stellung gehalten. Nach der Füllung wird der Stift 83 zurückgezogen, also nach außen (in der Darstellung der Fig. 7 nach unten) gezogen. Diese Bewegung wird durch den Druck unterstützt, der innerhalb des Raumes 76 herrscht (zu diesem Zweck ist der Verriegelungsstift kegelförmig erweitert; die Endfläche 84 ist also größer als die sonstige Querschnittsfläche des Verriegelungsstiftes 83). Der Verriegelungsstift 83 kann nach der vollständigen Befüllung des Druckgasraumes 73, 76 verschweißt werden, wie durch das Bezugszeichen 85 angedeutet.

In dem Einsatz 77 befindet sich ein Zündgehäuse 86. Dieses ist über ein Gewinde 87 mit dem Einsatz 77 verschraubt. In dem Zündgehäuse 86 befindet sich ein Hohlraum 88, der mit einer Treibladung (in der Zeichnung nicht dargestellt) gefüllt ist. Die Treibladung kann über elektrische Anschlußdrähte (in der Zeichnung ebenfalls nicht dargestellt) gezündet werden. Sie schießt dann einen in der Zeichnung der Fig. 7 nicht dargestellten Stift durch die Bohrung 89 hindurch auf die Abschlußplatte (Berstscheibe) zu und durch diese hindurch. Die Abschlußplatte 79 wird zerstört und bewirkt, daß das Druckgas über den ringförmigen Weg 90 in das in der Zeichnung der Fig. 7 nicht dargestellte Airbag hineingeblasen wird.

Das in der Fig. 7 dargestellte Ausführungsbeispiel ermöglicht eine besonders kleine und platzsparende Realisierung eines Druckgasbehälters für ein Airbag. Dies wird dadurch erreicht, daß der Raum für das Druckgas als Ringraum ausgestaltet ist und an de Endflächen des scheibenförmigen Gehäuses ringförmig verschweißt ist. In einem praktisch ausgeführten Beispiel werden 33 Normal-Liter Helium in das insgesamt 51 Kubikzentimeter betragende Volumen eingefüllt. Das Helium befindet sich bei 20° C mit einem Druck von 700 bar in dem Gehäuse bzw. in dem Druckgasraum. Bei einer Erhitzung des Gehäuses auf 80° C steigt der Druck auf 900 bar. Das Gehäuse ist sicherheitstechnisch ausgelegt auf einen Höchstdruck von 1350 bis 1400 bar.

## Patentansprüche

1. Gaskissen-Aufprallschutzvorrichtung (Airbag) für die Insassen eines Kraftfahrzeugs mit einem durch eine Druckgasquelle (1, 2) aufblasbaren Gaskissen (3),

   **gekennzeichnet durch**

   ein zwischen dem Gaskissen-Innenraum (51) und der Umgebung (52) angeordnetes Ablaßventil (53), das bei Überschreitung einer vorgegebenen Druckdifferenz zwischen Gaskissen-Innenraum (51) und Umgebung (52) öffnet.

2. Airbag nach Anspruch 1, dadurch gekennzeichnet, daß die vorgegebene Druckdifferenz 1 bar beträgt.

3. Airbag nach Anspruch 1 oder 2, dadurch gekennzeichnet, daß das Ablaßventil (53) zunächst vollständig geschlossen ist und erst nach der Betätigung der Druckgasquelle (1, 2) aktiviert wird, vorzugsweise nach einer vorgegebenen Zeitspanne nach der Betätigung der Druckgasquelle (1, 2).

4. Airbag nach Anspruch 3, dadurch gekennzeichnet, daß das Ablaßventil (53) 30 ms oder 10 bis 15 ms nach der Betätigung der Druckgasquelle (1, 2) aktiviert wird.

5. Airbag nach einem der vorhergehenden Ansprüche, dadurch gekennzeichnet, daß zwei Druckgasquellen (1, 2) vorhanden sind und daß die zweite Druckgasquelle (2) eine vorgegebene Zeitspanne von vorzugsweise 15 ms nach der ersten Druckgasquelle (1) betätigt wird.

6. Airbag nach einem der Ansprüche 1 bis 5, dadurch gekennzeichnet, daß das Ablaßventil (53) über einen pyrotechnischen Auslösemechanismus (63, 62, 61, 60) aktiviert wird.

7. Airbag nach einem der vorhergehenden Ansprüche, dadurch gekennzeichnet, daß das Ablaßventil (53) ein Gehäuse (55) besitzt, in dem ein eine Ventilplatte (58) tragender Ventilstößel (59) längsverschieblich und federbelastet (64) geführt ist.

8. Airbag nach einem der vorhergehenden Ansprüche, dadurch gekennzeichnet, daß das Ablaßventil (53) an seiner dem Gaskissen-Innenraum (51) zugewandten Seite eine Abschlußplatte (60) besitzt, die vorzugsweise durch einen Stift (61) entfernbar und/oder zerstörbar ist, wobei der Stift (61) vorzugsweise durch eine Treibladung (62) antreibbar ist.

9. Airbag nach Anspruch 7 oder 8, dadurch gekennzeichnet, daß der Ventilstößel (59) mit einer Lochplatte (56) verbunden ist, die in dem Gehäuse (55) längsverschieblich geführt ist.

10. Airbag nach einem der Ansprüche 7 bis 9, dadurch gekennzeichnet, daß die Ventilplatte (58) auf dem unteren Ende des Gehäuses (55) dichtend aufliegt.

11. Airbag nach Anspruch 9 oder 10, dadurch gekennzeichnet, daß die Ventilfeder (64) zwischen einem Absatz des Gehäuses (55) und der Lochplatte (56) als Druckfeder angeordnet ist.

12. Airbag nach einem der vorhergehenden Ansprüche, dadurch gekennzeichnet, daß die Druckgasquelle durch ein Gehäuse (71) mit einem Ringraum (73) gebildet wird.

13. Airbag nach Anspruch 12, dadurch gekennzeichnet, daß der Ringraum (73) beidseitig ringförmig verschweißt (74) ist.

14. Airbag nach Anspruch 12 oder 13, gekennzeichnet durch einen zentralen, mit dem Gehäuse (71) verschweißten (78) Einsatz (77).

15. Airbag nach Anspruch 14, dadurch gekennzeichnet, daß mit dem Einsatz (77) eine Abschlußplatte (79) verbunden, vorzugsweise verschweißt (80) ist.

16. Airbag nach einem der Ansprüche 11 bis 15, dadurch gekennzeichnet, daß das Gehäuse (71) scheibenförmig ist.

17. Airbag nach Anspruch 16, dadurch gekennzeichnet, daß der Querschnitt des Ringraums (73) in radialer Richtung (x) kleiner ist als in axialer Richtung (y).

18. Airbag nach einem der Ansprüche 11 bis 17, dadurch gekennzeichnet, daß der Querschnitt des Ringraums (73) elliptisch oder ellipsenähnlich ist.

Fig. 1

7

Fig. 2

EP 0 451 731 A2

41

43

31

II

II

31

Fig. 3

44  44  33

45

43

43

II

33

42

43

45

43

33

II

33

45

45

Fig. 4

33  43

EP 0 451 731 A2

57
56
55

**Fig.6**

51
53
60
61
57
55
56
54
54
64
59
65
63
58
62

**Fig.5**

52

Fig. 1